# EUROPEAN PATENT SPECIFICATION

(11) **EP 4 283 951 B1**
(45) Date of publication and mention of the grant of the patent: **14.10.2026**
(21) Application number: 23200641.1
(22) Date of filing: 16.02.2015
(51) Int. Cl.: H04L 51/046

(54) **ELECTRONIC DEVICE AND METHOD FOR EXTRACTING AND USING SEMANTIC ENTITY IN TEXT MESSAGE OF ELECTRONIC DEVICE**
ELEKTRONISCHE VORRICHTUNG UND VERFAHREN ZUR EXTRAKTION UND VERWENDUNG EINER SEMANTISCHEN ENTITÄT IN EINER TEXTNACHRICHT DER ELEKTRONISCHEN VORRICHTUNG
DISPOSITIF ÉLECTRONIQUE ET PROCÉDÉ POUR EXTRAIRE ET UTILISER UNE ENTITÉ SÉMANTIQUE DANS UN TEXTO D'UN DISPOSITIF ÉLECTRONIQUE

(30) Priority: 14.02.2014 KR 20140017369
(43) Date of publication of application: 29.11.2023
(62) Document number(s) of the earlier application(s) in accordance with Art. 76 EPC: 21216351.3 / 3 996 354; 15748680.4 / 3 105 858
(73) Proprietor: Samsung Electronics Co., Ltd., Suwon-si, Gyeonggi-do 16677 (KR)
(72) Inventor: LEE, Yoonkyung, 16677 Suwon-si (KR); LEE, Muwoong, 16677 Suwon-si (KR); LEE, Jaewon, 16677 Suwon-si (KR); CHO, Sunghoon, 16677 Suwon-si (KR); KIM, Sangmi, 16677 Suwon-si (KR); ROH, Donghyun, 16677 Suwon-si (KR); CHANG, Seokjin, 16677 Suwon-si (KR)
(74) Representative: HGF

(56) References cited:
- US-A1- 2007 280 131
- TONY JOHN: "What is Semantic Search and how it works with Google search", 15 March 2012 (2012-03-15), XP055408737, Retrieved from the Internet <URL:http://www.techulator.com/resources/5933-What-Semantic-Search.aspx> [retrieved on 20170921]
- FARHAD ABEDINI ET AL: "From Text to Knowledge: Semantic Entity Extraction using YAGO Ontology", INTERNATIONAL JOURNAL OF MACHINE LEARNING AND COMPUTING, 1 June 2011 (2011-06-01), Singapore, pages 113 - 119, XP055219105, Retrieved from the Internet <URL:http://ijmlc.org/papers/17-C00194-001.pdf> DOI: 10.7763/IJMLC.2011.V1.17

## Description

### Technical Field

Apparatuses and methods consistent with exemplary relate to an electronic device and a method of extracting and using a semantic entity in a text message of an electronic device.

### Background Art

Recent electronic devices provide various features to users. For example, electronic devices provide a number of features, such as a basic mobile phone service that allows a user to call, built-in cameras to capture an image or video, video streaming, video downloading, Internet access and browsing, and the like. Further, electronic devices provide a message function through which a user can exchange messages with other users. Recent electronic devices display transmitted/received messages through a user interface in a conversation type. Transmission of messages between users using electronic devices plays an important role in information transmission between the users.

Meanwhile, when a user desires to recall a semantic entity (for example, a place name, a shop name, and an address) received through messages transmitted/received to/from an electronic device when necessary later, the user should pass through a complex process to recall and search for some of the content to be found, or recall a conversation partner to which a semantic entity was transmitted, as well as, a conversation time, and search for the corresponding content.

"What is Semantic Search and how it works with Google search", Tony John, 15 March 2012, retrieved from: http://www.techulator.com/resources/5933-What-Semantic-Search.aspx discusses semantic search as used by major search engines. A few real world examples of search results produced by search engines are presented.

"From Text to Knowledge: SEMANTIC Entity Extraction using YAHO Ontology" International Journal of Machine Learning and Computing, 1 June 2011, pages 113-119 relates to a system to extract semantic entities from texts. A disambiguation method is suggested to match an ambiguous entity with a semantic entity in a knowledgebase.

Document US2007/280131 discloses a history database which is continuously updated when sending a text message so that address candidates can be provided.

### Disclosure of Invention

### Solution to Problem

Exemplary embodiments address at least the above problems and/or disadvantages and other disadvantages not described above.

According to an aspect of the invention, there is provided a method according to claim 1 and an electronic device according to claim 10.

### Brief Description of Drawings

The above and/or other aspects will be more apparent by describing certain exemplary embodiments, with reference to the accompanying drawings, in which:
FIG. 1 is a block diagram illustrating a configuration of an electronic device;
FIG. 2 is a flowchart illustrating a method of extracting a semantic entity by an electronic device;
FIG. 3 is a flowchart illustrating a method of using a semantic entity by an electronic device;
FIG. 4 illustrates a text message user interface; and
FIG. 5 illustrates a user interface using a semantic entity.

### Mode for the Invention

Exemplary embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the exemplary embodiments. However, it is apparent that the exemplary embodiments can be practiced without those specifically defined matters. Also, well-known functions or constructions are not described in detail since they would obscure the description with unnecessary detail.

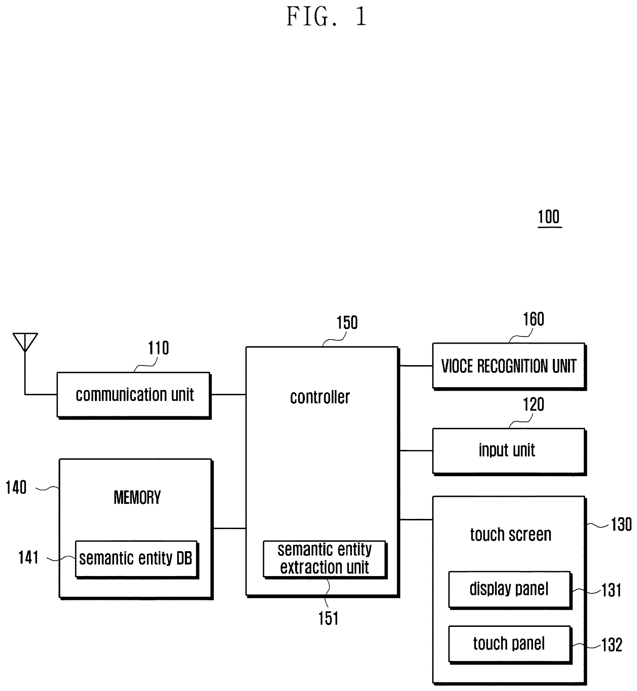

FIG. 1 is a block diagram illustrating a configuration of an electronic device 100.

The electronic device 100 includes a communication unit 110, an input unit 120, a touch screen 130, a memory 140, a controller 150, and a voice recognition unit 160.

The electronic device 100 corresponds to a device that provides a message transmitting/receiving function and may be a mobile communication terminal, a smart phone, a tablet Personal Computer (PC), a PC, a hand-held PC, a Portable Multimedia Player (PMP), a Personal Digital Assistant (PDA), a notebook PC or the like.

The communication unit 110 supports a wired/wireless communication function of the electronic device 100. When the electronic device 100 supports the wired communication function, the communication unit 110 may include a wired communication module. When the electronic device 100 supports the wireless communication function, the communication unit 110 may include a wireless communication module. The communication unit 110 may include a mobile communication module and/or a short-range communication module as the wireless communication module. The communication unit 110 may include a Radio Frequency (RF) transmitter (not shown) for up-converting and amplifying a frequency of a transmitted signal and an RF receiver (not shown) for low noise-amplifying a received signal and down-converting a frequency. The communication unit 110 may transmit and receive messages to and from one or more counterpart electronic devices (for example, an electronic device of a counterpart user in conversation). Messages may include an instant message, a Short Message Service (SMS) for displaying messages through a User Interface (UI) of a conversation type, a Multimedia Message Service (MMS), e-mail, and a unified messenger service. Messages may be characters or an image including characters.

The input unit 120 may include a plurality of input keys and function keys for receiving number or character information and configuring various functions. The function keys may include a direction key, a side key, and a shortcut key, which are set to execute particular functions. The input unit 120 may generate a key signal related to a user setting and a control of functions of the electronic device 100 and transmit the generated key signal to the controller 150. The input unit 120 may be configured by one or a combination of input means, such as a qwerty keypad, a keypad, a keypad, a ball joystick, an optical joystick, a wheel key, a touch key, a touch pad, and a touch screen. For example, when the electronic device 100 supports a touch screen, the input unit 120 may include only some function keys, such as a volume key, a power key, a menu key, a cancellation key, and a home key. The input unit 120 may generate an input signal for generating a message and an input signal for inputting a suggested semantic entity into an input field, and transmit the generated input signals to the controller 150.

The touch screen 130 may perform an input function and a display function. The touch screen 130 may include a display panel 131 and a touch panel 132. The display panel 131 displays information input by a user or information to be provided to the user as well as various menus of the electronic device 100. The display panel 131 may be formed by one of a Liquid Crystal Display (LCD), an Organic Light Emitting Diode (OLED), and an Active Matrix Organic Light Emitted Diode (AMOLED). The display panel 131 may provide various screens according to the use of the electronic device 100, for example, a home screen, a menu screen, a webpage screen, and a call screen. The display panel 131 may display text messages on a conversation screen by using a speech bubble. The display panel 131 may also display a screen for executing an application including an input field and a screen for displaying a suggested semantic entity.

The touch panel 132 is a device for providing an input function and may generate a touch event when a touch input device, for example, a user's finger, a stylus pen, or an electronic pen contacts or approaches the electronic device and transmit the generated touch event to the controller 150. The touch panel 132 may recognize the generation of the touch event through a change in physical quantity (for example, capacitance, electromotive force, resistance or the like) according to the contact or approach of the touch input device, and transmit the type of the generated touch event (tap, touch movement (drag, flick or the like), long touch, double touch, multi-touch or the like) and touch position information to the controller 150. The touch panel 132 may generate a touch signal for generating a message and a touch signal for inputting a suggested semantic entity into an input field, and transmit the generated touch signals to the controller 150.

The voice recognition unit 160 may receive a voice signal that is generated by a microphone included in the input unit 120 when a user speaks a voice command. The voice recognition unit 160 may capture a meaning of the voice command and generate command data corresponding to the captured meaning of the voice command. Then, the voice recognition unit 160 may transmit the generated command data to the controller 150.

The memory 140 may store an Operating System (OS) of the electronic device 100 and applications necessary for other optional functions, for example, a sound reproduction function, an image or video reproduction function, a broadcast reproduction function, an Internet access function, and a text message function. The memory 140 may store various types of data, for example, a document file, a video file, a game file, a music file, a movie file and the like. The memory 140 may include a text message and a semantic entity database 141. The semantic entity database 141 may include a semantic entity extracted from a transmitted/received message. The semantic entity database 141 may store a content of the semantic entity (for example, text), a type of the semantic entity (a place name, a person name, an address, a phone number, a song title, a schedule, a movie title or the like), a source of the semantic entity (an original message from which the semantic entity is extracted).

The controller 150 may control an overall operation of the electronic device 100 and a signal flow between internal blocks of the electronic device 100, and perform a data processing function. For example, the controller 150 may include a Central Processing Unit (CPU), an Application Processor (AP), and the like. The controller 150 may be implemented by a single core processor or a multi-core processor.

The controller 150 controls a process of extracting a semantic entity. The controller 150 may include a semantic entity extraction unit 151 to extract a semantic entity from a transmitted/received message. The controller 150 may extract a content of the semantic entity (for example, text), a type of the semantic entity (a place name, a person name, an address, a phone number, a song title, a schedule, a movie title or the like), a source of the semantic entity (an original message from which the semantic entity is extracted). The extracted semantic entity is stored in the memory 140 as the semantic entity database 141 under a control of the controller 150. When an application including an input field is executed, the controller 150 may control the display panel 131 to output the application. The controller 150 identifies a semantic setting content to determine which type of value is suitable for the input field. For example, when an application including an input field is a map application, the map application may be configured to search for a place name or address, which is called a semantic setting. The controller 150 may control the display panel 131 to identify a semantic setting configured for an application to search for semantic entities, rank the semantic entities, and output the semantic entities in an order as ranked. When a transmitted/received message is an image including characters, the controller 150 may extract a semantic entity through characters extracted from the image. In order to extract the characters from the image, the electronic device 100 may include a character reader function.

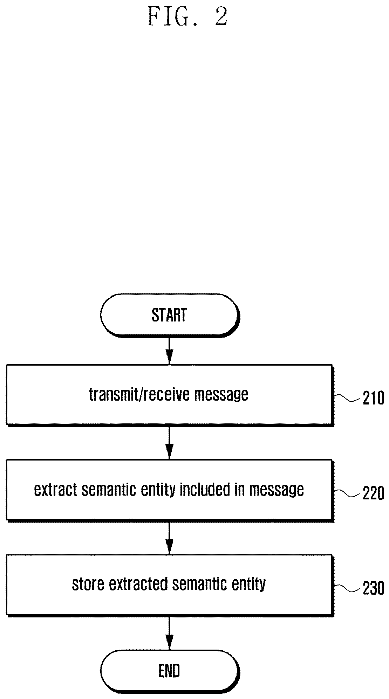

FIG. 2 is a flowchart illustrating a method of extracting a semantic entity by the electronic device 100.

The electronic device 100 transmits/receives a message to/from other electronic devices in operation 210. The electronic device 100 extracts from the message a semantic entity including a content (for example, text), a type (a place name, a person name, an address, a phone number, a song title, a schedule, a movie title or the like), and optionally a source (an original message from which the semantic entity is extracted) of the semantic entity in operation 220. The electronic device 100 stores the extracted semantic entity (for example, the content of the semantic entity, the type of the semantic entity, the source of the semantic entity, or the like) as a database in operation 230.

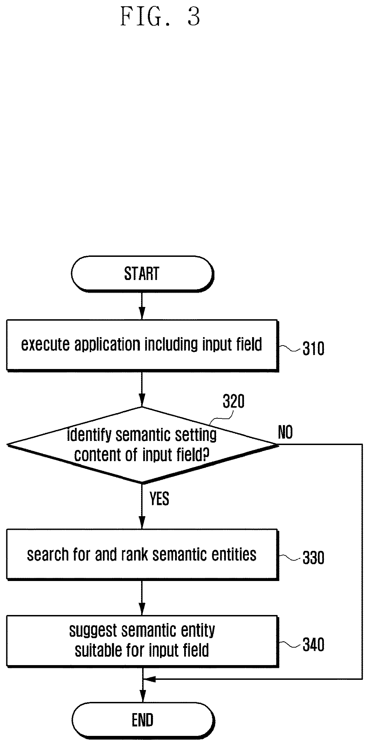

FIG. 3 is a flowchart illustrating a method of using an extracted semantic entity by the electronic device 100.

The electronic device 100 executes an application including an input field in operation 310. The electronic device 100 identifies a semantic setting content of the input field in operation 320. The electronic device 100 identifies which type of semantic entity is suitable for the input field in operation 320. When a semantic setting indicating a type of a semantic entity suitable for the input field exist, the electronic device 100 searches for one or more semantic entities based on the semantic setting and rank the found semantic entities in operation 330. The electronic device 100 may rank the semantic entities according to a receiving or transmitting time of an original message, reliability of a result of an extracted semantic entity, or a recipient or sender of an original message in operation 330. For example, if a source of a sematic entity is a message transmitted/received to/from a number in a favorite contact list of the electronic device 100, the semantic entity may be ranked in a high place. In another example, the controller 150 may calculate a weighted average of three input values (e.g., a receiving or transmitting time of an original message, reliability of a result of an extracted semantic entity, and a recipient or sender of an original message) of a semantic entity, and determine a rank of the semantic entity based on the calculated weighted average.

The electronic device 100 may display the one or more found and ranked semantic entities on the display panel 131 and suggest them to the user in operation 340. While suggesting the one or more found and ranked semantic entities in operation 340, the electronic device 100 may display a message from which the suggested semantic entities are extracted or reconstruct a messaging service as original to be referred to.

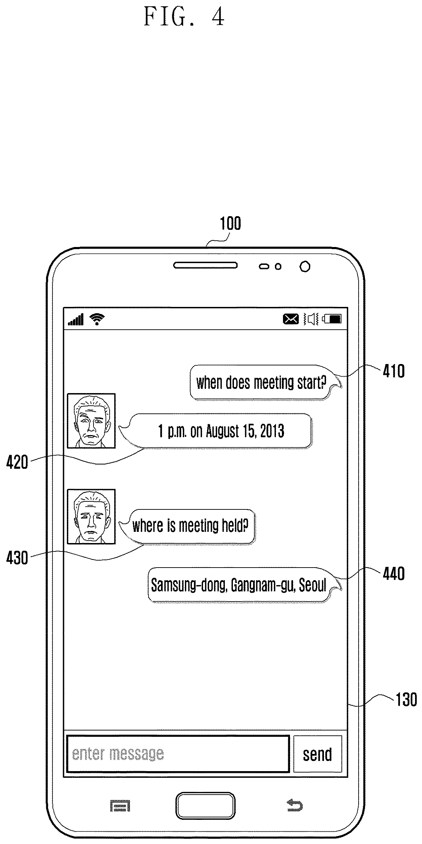

FIG. 4 illustrates a text message user interface.

The electronic device 100 may include one or more text messages 410, 420, 430, and 440. The electronic device 100 may extract semantic entities from the text messages 410, 420, 430, and 440, conversation partners, conversation time or the like. For example, the electronic device 100 may extract one or more of a semantic entity content, a semantic entity type, and a semantic entity source from a phrase "1 p.m. on August 15, 2013" included in a text message 420. The electronic device 100 may extract the text (semantic entity content) corresponding to 1 p.m. on August 15, 2013, the semantic entity type corresponding to schedule information, and the semantic entity source corresponding to a conversation partner or conversation time from the phrase "1 p.m. on August 15, 2013" included in the text message 420. Further, the electronic device 100 may extract one or more of the semantic entity content, the semantic entity type, and the semantic entity source from the phrase "Samsung-dong, Gangnam-gu, Seoul" included in a text message 440. The electronic device 100 may extract the text (semantic entity content) corresponding to Samsung-dong, Gangnam-gu, Seoul, the semantic entity type corresponding to place name or address information, and the semantic entity source corresponding to a conversation partner or conversation time from the phrase "Samsung-dong, Gangnam-gu, Seoul" included in the text message 440.

The electronic device 100 may store different types of extracted semantic entities according to the content of text messages. For example, when there is information on a song or movie in the text message content, the electronic device 100 may classify the text message content as a type related to song or movie information and store the text message content. For example, when there is information on food (for example, a food name) in the text message content, the electronic device 100 may classify the text message content as a type related to the food and store the text message content. For example, when there is information on a reservation time in the text message content, the electronic device 100 may classify the text message content as a type related to the reservation time and store the text message content.

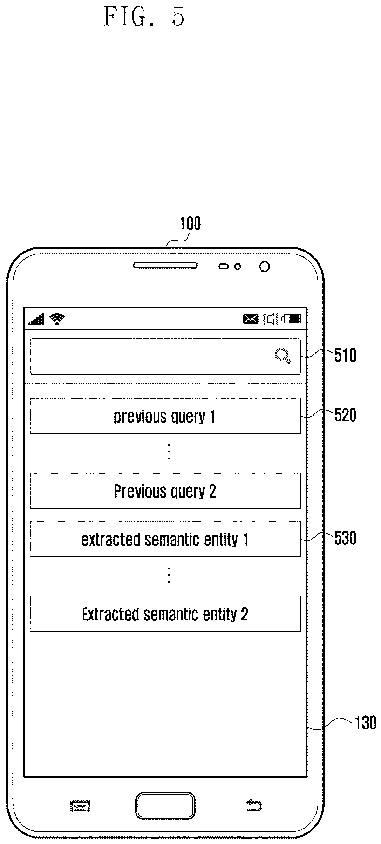

FIG. 5 illustrates a user interface using a semantic entity.

The electronic device 100 executes and displays an application including an input field 510 on the touch screen 130. The input field 510 is not limited to a field in which a user may type in a text, and may refer to a field that indicate a user input or command (e.g., text, voice command, etc.) that the electronic device 100 recognizes.

When the application including the input field 510 is executed, the electronic device 100 may display one or more previous search queries 520 on the touch screen 130. When the application including the input field 510 is executed, the electronic device 100 may display one or more extracted semantic entities 530 on the touch screen 130. The one or more extracted semantic entities 530 correspond to one or more semantic entities which have been found and ranked through the identification of the semantic setting content to determine which semantic entity is suitable for the input field 510, by the electronic device 100.

The foregoing description and advantages are merely exemplary and are not to be construed as limiting. The present teaching can be readily applied to other types of apparatuses. Also, the description of the exemplary embodiments is intended to be illustrative, and many alternatives, modifications, and variations will be apparent to those skilled in the art within the scope of the appended claims.

## Claims

1. A method of using a semantic entity by an electronic device, the method comprising:
transmitting or receiving (210) a message;
extracting (220) a semantic entity from the message;
storing (230) the semantic entity in a database, wherein storing the semantic entity comprises storing a content and a type of semantic entity;
executing (310) an application and displaying a screen of the application, the screen including an input field;
identifying (320) a semantic setting content for the input field indicating a type of semantic entity for the input field;
searching (330) the database for semantic entities based on the identified semantic setting content; and
suggesting (340) at least one semantic entity from the searched semantic entities for the input field.

2. The method of claim 1, wherein the type of the extracted semantic entity includes a place name, an address, a person name, a phone number, a song title, a schedule, or a movie title.

3. The method of claim 1, wherein the type of extracted semantic entity includes a place name or an address.

4. The method of claim 1, wherein the extracting comprising recognizing a context from the message, and extracting the semantic entity from the recognized context.

5. The method of claim 1, wherein the searching the database comprises ranking the searched semantic entities.

6. The method of claim 5, wherein the extracting further comprises extracting a source of the extracted semantic entity.

7. The method of claim 5, wherein the searching comprises ranking the searched semantic entities according to a receiving or transmitting time, reliability, or a recipient or sender of the searched semantic entities.

8. The method of claim 7, further comprising suggesting the searched semantic entities in an order of the ranking.

9. The method of claim 8, wherein the suggesting comprises displaying a message from which the suggested semantic entities are extracted or reconstructing a messaging service as original.

10. An electronic device (100) comprising:
A communication unit (110) configured to transmit or receive (210) a message;
a controller (150) configured to extract (220) a semantic entity from the message;
a memory (140) configured to store (230) the extracted semantic entity as a database, wherein storing the semantic entity comprises storing a content and a type of the semantic entity;
wherein the controller (150) is further configured to:
execute (310) an application and display a screen of the application, the screen including an input field;
identify (320) a semantic setting content for the input field indicating a type of semantic entity for the input field;
search (330) the database for semantic entities based on the identified semantic setting content;
suggesting (340) at least one semantic entity from the searched semantic entities for the input field; and
wherein the device further comprises:
a display (130) configured to output the suggested semantic entity.

11. The electronic device of claim 10, wherein the type of the extracted semantic entity includes a place name, an address, a person name, a phone number, a song title, a schedule, or a movie title.

12. The electronic device of claim 10, wherein the controller is further configured to recognize a context from the message, and extract the semantic entity from the recognized context.

13. The electronic device of claim 10, wherein the controller further extracts a source of the extracted semantic entity from the message.

14. The electronic device of claim 13, wherein the controller is further configured to control the display to display the searched semantic entities in an order of the ranking in response to the application being executed.

15. The electronic device of claim 13, wherein the controller is further configured to display a message from which the searched semantic entities are extracted or reconstruct a messaging service as original.

## Patentansprüche

1. Verfahren zur Verwendung einer semantischen Entität durch eine elektronische Vorrichtung, wobei das Verfahren Folgendes umfasst:
Übertragen oder Empfangen (210) einer Nachricht;
Extrahieren (220) einer semantischen Entität aus der Nachricht;
Speichern (230) der semantischen Entität in einer Datenbank, wobei das Speichern der semantischen Entität Speichern eines Inhalts und eines Typs von semantischer Entität umfasst;
Ausführen (310) einer Anwendung und Anzeigen eines Bildschirms der Anwendung, wobei der Bildschirm ein Eingabefeld beinhaltet;
Identifizieren (320) eines semantischen Einstellungsinhalts für das Eingabefeld, der einen Typ von semantischer Entität für das Eingabefeld angibt;
Durchsuchen (330) der Datenbank nach semantischen Entitäten basierend auf dem identifizierten semantischen Einstellungsinhalt; und
Vorschlagen (340) von zumindest einer semantischen Entität aus den durchsuchten semantischen Entitäten für das Eingabefeld.

2. Verfahren nach Anspruch 1, wobei der Typ der extrahierten semantischen Entität einen Ortsnamen, eine Adresse, einen Personennamen, eine Telefonnummer, einen Liedtitel, einen Zeitplan oder einen Filmtitel beinhaltet.

3. Verfahren nach Anspruch 1, wobei der Typ von extrahierter semantischer Entität einen Ortsnamen oder eine Adresse beinhaltet.

4. Verfahren nach Anspruch 1, wobei das Extrahieren Erkennen eines Kontexts aus der Nachricht und Extrahieren der semantischen Entität aus dem erkannten Kontext umfasst.

5. Verfahren nach Anspruch 1, wobei das Durchsuchen der Datenbank Ordnen der durchsuchten semantischen Entitäten umfasst.

6. Verfahren nach Anspruch 5, wobei das Extrahieren ferner Extrahieren einer Quelle der extrahierten semantischen Entität umfasst.

7. Verfahren nach Anspruch 5, wobei das Durchsuchen Ordnen der durchsuchten semantischen Entitäten gemäß einer Empfangs- oder Übertragungszeit, Zuverlässigkeit oder einem Empfänger oder Sender der durchsuchten semantischen Entitäten umfasst.

8. Verfahren nach Anspruch 7, ferner umfassend Vorschlagen der durchsuchten semantischen Entitäten in einer Reihenfolge des Ordnens.

9. Verfahren nach Anspruch 8, wobei das Vorschlagen Anzeigen einer Nachricht, aus der die vorgeschlagenen semantischen Entitäten extrahiert werden, oder Rekonstruieren eines Nachrichtendienstes als Original umfasst.

10. Elektronische Vorrichtung (100), umfassend:
eine Kommunikationseinheit (110), die dazu konfiguriert ist, eine Nachricht zu übertragen oder zu empfangen (210);
eine Steuerung (150), die dazu konfiguriert ist, eine semantische Entität aus der Nachricht zu extrahieren (220);
einen Speicher (140), der dazu konfiguriert ist, die extrahierte semantische Entität als eine Datenbank zu speichern (230), wobei das Speichern der semantischen Entität Speichern eines Inhalts und eines Typs der semantischen Entität umfasst;
wobei die Steuerung (150) ferner zu Folgendem konfiguriert ist:
Ausführen (310) einer Anwendung und Anzeigen eines Bildschirms der Anwendung, wobei der Bildschirm ein Eingabefeld beinhaltet;
Identifizieren (320) eines semantischen Einstellungsinhalts für das Eingabefeld, der einen Typ von semantischer Entität für das Eingabefeld angibt;
Durchsuchen (330) der Datenbank nach semantischen Entitäten basierend auf dem identifizierten semantischen Einstellungsinhalt;
Vorschlagen (340) von zumindest einer semantischen Entität aus den durchsuchten semantischen Entitäten für das Eingabefeld; und
wobei die Vorrichtung ferner Folgendes umfasst:
eine Anzeige (130), die dazu konfiguriert ist, die vorgeschlagene semantische Entität auszugeben.

11. Elektronische Vorrichtung nach Anspruch 10, wobei der Typ der extrahierten semantischen Entität einen Ortsnamen, eine Adresse, einen Personennamen, eine Telefonnummer, einen Liedtitel, einen Zeitplan oder einen Filmtitel beinhaltet.

12. Elektronische Vorrichtung nach Anspruch 10, wobei die Steuerung ferner dazu konfiguriert ist, einen Kontext aus der Nachricht zu erkennen und die semantische Entität aus dem erkannten Kontext zu extrahieren.

13. Elektronische Vorrichtung nach Anspruch 10, wobei die Steuerung ferner eine Quelle der extrahierten semantischen Entität aus der Nachricht extrahiert.

14. Elektronische Vorrichtung nach Anspruch 13, wobei die Steuerung ferner dazu konfiguriert ist, die Anzeige zu steuern, um die durchsuchten semantischen Entitäten in einer Reihenfolge des Ordnens als Reaktion darauf, dass die Anwendung ausgeführt wird, anzuzeigen.

15. Elektronische Vorrichtung nach Anspruch 13, wobei die Steuerung ferner dazu konfiguriert ist, eine Nachricht anzuzeigen, aus der die durchsuchten semantischen Entitäten extrahiert werden, oder einen Nachrichtendienst als Original zu rekonstruieren.

## Revendications

1. Procédé d'utilisation d'une entité sémantique par un dispositif électronique, le procédé comprenant :
la transmission ou la réception (210) d'un message ;
l'extraction (220) d'une entité sémantique à partir du message ;
le stockage (230) de l'entité sémantique dans une base de données, dans lequel le stockage de l'entité sémantique comprend le stockage d'un contenu et d'un type d'entité sémantique ;
l'exécution (310) d'une application et l'affichage d'un écran de l'application, l'écran comprenant un champ de saisie ;
l'identification (320) d'un contenu de paramètre sémantique pour le champ de saisie indiquant un type d'entité sémantique pour le champ de saisie ;
la recherche (330) d'entités sémantiques dans la base de données sur la base du contenu de paramètre sémantique identifié ; et
la suggestion (340) d'au moins une entité sémantique à partir des entités sémantiques recherchées pour le champ de saisie.

2. Procédé de la revendication 1, dans lequel le type de l'entité sémantique extraite comprend un nom de lieu, une adresse, un nom de personne, un numéro de téléphone, un titre de chanson, un programme ou un titre de film.

3. Procédé de la revendication 1, dans lequel le type d'entité sémantique extraite comprend un nom de lieu ou une adresse.

4. Procédé de la revendication 1, dans lequel l'extraction comprend la reconnaissance d'un contexte à partir du message, et l'extraction de l'entité sémantique à partir du contexte reconnu.

5. Procédé de la revendication 1, dans lequel la recherche dans la base de données comprend le classement des entités sémantiques recherchées.

6. Procédé de la revendication 5, dans lequel l'extraction comprend en outre l'extraction d'une source de l'entité sémantique extraite.

7. Procédé de la revendication 5, dans lequel la recherche comprend le classement des entités sémantiques recherchées selon une heure de réception ou d'émission, une fiabilité, ou un destinataire ou expéditeur des entités sémantiques recherchées.

8. Procédé de la revendication 7, comprenant en outre la suggestion des entités sémantiques recherchées dans un ordre du classement.

9. Procédé de la revendication 8, dans lequel la suggestion comprend l'affichage d'un message à partir duquel les entités sémantiques suggérées sont extraites ou la reconstruction d'un service de messagerie comme original.

10. Dispositif électronique (100) comprenant :
une unité de communication (110) configurée pour émettre ou recevoir (210) un message ;
un dispositif de commande (150) configuré pour extraire (220) une entité sémantique à partir du message ;
une mémoire (140) configurée pour stocker (230) l'entité sémantique extraite en tant que base de données, dans lequel le stockage de l'entité sémantique comprend le stockage d'un contenu et d'un type de l'entité sémantique ;
dans lequel le dispositif de commande (150) est en outre configuré pour :
exécuter (310) une application et afficher un écran de l'application, l'écran comprenant un champ de saisie ;
identifier (320) un contenu de paramètre sémantique pour le champ de saisie indiquant un type d'entité sémantique pour le champ de saisie ;
rechercher (330) des entités sémantiques dans la base de données sur la base du contenu de paramètre sémantique identifié ;
suggérer (340) au moins une entité sémantique à partir des entités sémantiques recherchées pour le champ de saisie ; et
dans lequel le dispositif comprend en outre :
un affichage (130) configuré pour délivrer en sortie l'entité sémantique suggérée.

11. Dispositif électronique de la revendication 10, dans lequel le type de l'entité sémantique extraite comprend un nom de lieu, une adresse, un nom de personne, un numéro de téléphone, un titre de chanson, un programme ou un titre de film.

12. Dispositif électronique de la revendication 10, dans lequel le dispositif de commande est en outre configuré pour reconnaître un contexte à partir du message, et extraire l'entité sémantique à partir du contexte reconnu.

13. Dispositif électronique de la revendication 10, dans lequel le dispositif de commande extrait en outre une source de l'entité sémantique extraite à partir du message.

14. Dispositif électronique de la revendication 13, dans lequel le dispositif de commande est en outre configuré pour commander à l'affichage d'afficher les entités sémantiques recherchées dans un ordre de classement en réponse à l'application en cours d'exécution.

15. Dispositif électronique de la revendication 13, dans lequel le dispositif de commande est en outre configuré pour afficher un message à partir duquel les entités sémantiques recherchées sont extraites ou reconstruire un service de messagerie comme original.
